Europäisches Patentamt

European Patent Office

Office européen des brevets

(19)

(11) Numéro de publication: **0 119 360**
**A1**

(12) # DEMANDE DE BREVET EUROPEEN

(21) Numéro de dépôt: **83400548.0**

(22) Date de dépôt: **16.03.83**

(51) Int. Cl.³: **B 23 Q 17/16,** B 27 F 1/02

(43) Date de publication de la demande: **26.09.84**
**Bulletin 84/39**

(84) Etats contractants désignés: **AT BE CH DE GB IT LI LU NL SE**

(71) Demandeur: **Société dite : SATURNE Société à Responsabilité Limitée, Obenheim, F-67230 Benfeld (FR)**

(72) Inventeur: **Godde, Germaine, née Laval, 4, rue de Schnersheim, F-67200 Strasbourg (FR)**

(74) Mandataire: **Rodhain, Claude, Cabinet Claude RODHAIN 30, rue La Boétie, F-75008 Paris (FR)**

(54) Appareil de contrôle et de réglage d'outils adaptable notamment aux tenonneuses-profileuses à entraînement par chaîne.

(57) — L'invention concerne un dispositif de contrôle et de réglage d'outils, adaptable notamment aux machines de l'industrie du bois telles que les tenonneuses-profileuses à entraînement par chaîne.

— L'appareil selon l'invention est caractérisé en ce qu'il est constitué d'un socle amovible (31) destiné à être fixé sur la chaîne d'entraînement de la machine, lorsque celle-ci est à l'arrêt, ce socle supportant un gabarit (33) par rapport auquel doivent être positionnés les outils portés par le chariot porte-tête d'usinage, ledit socle étant associé par ailleurs à un dispositif (18, 22, 26, 27, 29) de contrôle de la concentricité, de la perpendicularité et de l'horizontalité de l'arbre porte-outils de la tête d'usinage.

— L'appareil est particulièrement applicable aux machines du travail du bois telles que les tenonneuses-profileuses.

EP 0 119 360 A1

0119360

"Appareil de contrôle et de réglage d'outils adaptable notamment aux tenonneuses-profileuses à entraînement par chaîne".

L'invention concerne un dispositif de contrôle et de réglage d'outils adaptable notamment aux machines de l'industrie du bois telles que les tenonneuses-profileuses à entraînement par chaîne.

Dans l'état actuel de la technique, le contrôle et surtout le positionnement des outils portés par le chariot porte-tête d'usinage sont généralement peu précis et fastidieux. Par ailleurs, ces ajustements se faisant lorsque la machine est à l'arrêt, le temps passé à ces réglages, qui immobilisent la machine, se répercute défavorablement sur les temps de production. En outre, ces réglages se font le plus souvent par tâtonnement et nécessitent par conséquent l'usinage d'un certain nombre de pièces d'essais avant de parvenir à un bon résultat. Enfin, les procédés utilisés jusqu'alors ne permettent pas de déceler les défauts d'origine des broches ou arbres porte-outils de l'unité d'usinage.

L'invention a pour but de remédier à ces inconvénients et concerne à cet effet un appareil du type précité qui a pour but de permettre d'une part, des contrôles nécessaires à la réception et à la maintenance des machines, d'autre part d'effectuer des réglages faciles et précis du positionnement des outils montés sur les têtes d'usinage équipant les machines à opérations multiples du type tenonneuses-profileuses simples ou doubles, dont le déplacement des pièces à usiner est effectué par une chaîne transporteuse. De tels machines sont généralement utilisées dans les industries du bois pour la fabrication d'éléments de construction et la fabrication de meubles.

L'invention concerne donc un appareil de contrôle et de réglage d'outils, adaptable notamment aux machines de l'industrie du bois telles que les tenonneuses-profileuses à entraînement par chaîne, appareil caractérisé en ce qu'il est constitué d'un socle amovible destiné à être fixé sur la chaîne d'entraînement de la machine, lorsque celle-ci est à l'arrêt, ce socle supportant un gabarit par rapport auquel doivent être positionnés les outils portés par le chariot porte-tête d'usinage, ledit socle étant associé par ailleurs à un dispositif de contrôle de la concentricité, de la perpendicularité et de l'horizontalité de l'arbre porte-outils de la tête d'usinage.

Suivant un mode de réalisation, le gabarit de référence est fixé sur un porte-gabarit réglable s'emboîtant sur l'extrémité en forme de feuillure du socle, ce porte-gabarit étant immobilisé par un organe de blocage, mobile dans une lumière dudit porte-gabarit, et venant se visser dans le perçage du socle.

Suivant une caractéristique de l'invention, le socle sert de support à un dispositif de contrôle constitué d'une noix s'emmanchant sur un bossage cylindrique du socle, cette noix comportant un orifice perpendiculaire audit bossage dans lequel est introduite une broche portant une tige porte-noix servant à la fixation d'un comparateur ou palpeur.

D'autres caractéristiques et avantages ressortiront de la description ci-après et des dessins annexés dans lesquels :

- les fig. de 1 à 4 constituent une vue en perspective éclatée de l'ensemble de l'appareil selon l'invention ;

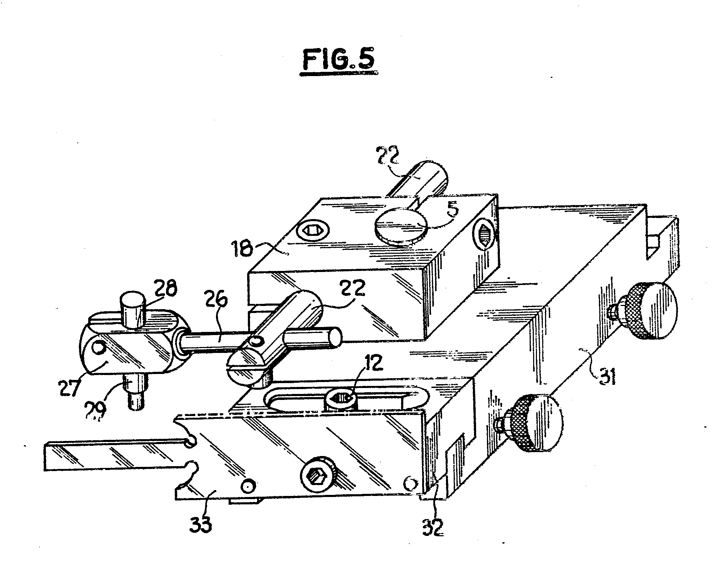

- la fig.5 est une vue en perspective de l'ensemble de l'appareil après assemblage.

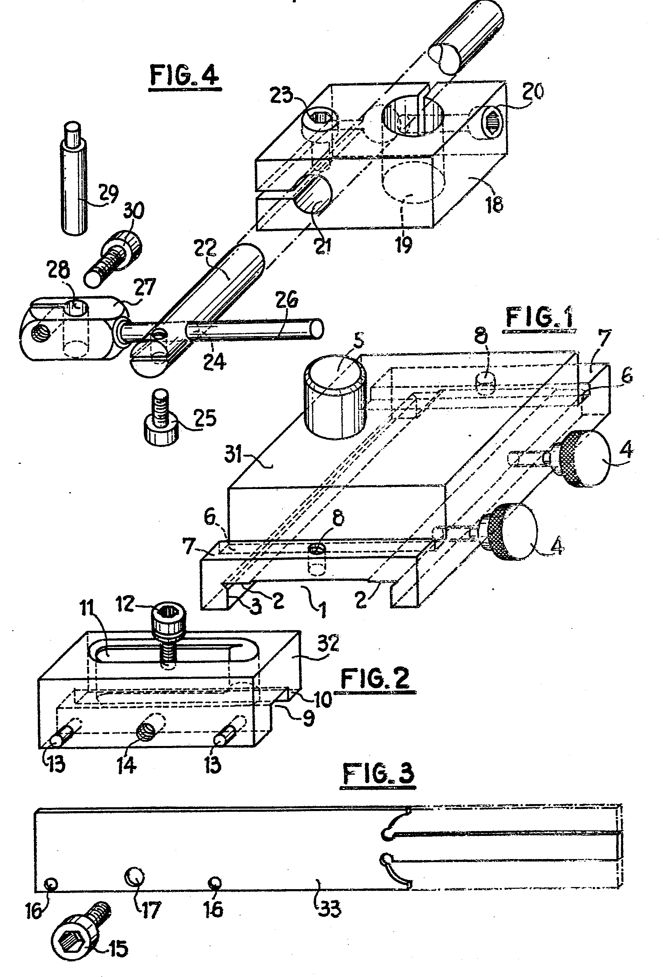

Tel que représenté en fig.1, l'appareil est constitué essentiellement d'un socle amovible 31 dont la face inférieure , qui est adaptée à la largeur des chaînes des machines, présente une rainure longitudinale 1 ayant un profil complémentaire de la chaine d'entraînement (non représentée) cette rainure venant s'encastrer sur les maillons de la chaîne de manière que sa face d'appui 2 repose sur la face supérieure du maillon et sa paroi latérale sur le chant dudit maillon. Le socle 1 est ainsi parfaitement assis sur le maillon de la chaîne et est rendu solidaire de celle-ci par des organes de fixation tels que des vis de blocage 4 traversant ledit socle et débouchant dans la rainure 1.

0119360

- 3 -

Le socle comporte à chacune de ses extrémités un dégagement en forme de feuillure dont la face horizontale est pourvue d'une rainure transversale 6 dont le fond comporte un perçage fileté 8, cette rainure définissant une nervure ou glissière 7 qui servira de guide à un porte-gabarit 32 (fig.2).

Le porte-gabarit 32 se présente sous la forme d'un bloc dont la face inférieure est pourvue d'une rainure transversale 9 définissant un talon 10 dont les dimensions correspondent à celles des rainures 6 du socle. Ainsi, le porte-gabarit 32 peut être encastré dans l'une des deux feuillures du socle, par simple emboîtement, comme illustré en fig.5. Le positionnement du porte-gabarit 32 par rapport au socle est assuré par un organe de blocage 12 tel qu'une vis venant se fixer dans le perçage fileté 8, ce porte-gabarit pouvant être réglé latéralement par rapport au socle, d'une part en raison des nervures 7 du socle, et d'autre part, du fait de la lumière 11 prévue dans le porte-gabarit et dans laquelle peut se mouvoir la vis de blocage 12.

La façade du porte-gabarit 32 comprend deux tétons de fixation 13 et un orifice fileté 14 permettant le positionnement et la fixation du gabarit 33 qui comporte quant à lui, deux trous de positionnement 16 et un trou de fixation 17 susceptible d'être traversé par un organe de blocage 15 venant se visser dans le trou 14. Ce gabarit peut être réalisé en métal léger ou en matière plastique de faible épaisseur, dont le profil ou le contour correspondent à chaque type de pièce à usiner. Le positionnement du gabarit par rapport au porte-gabarit 32 est tel que le chant de référence inférieur du gabarit est parfaitement positionné par rapport à la face de référence constituée par la surface supérieure des maillons de la chaîne.

La fixation du dispositif sur la chaîne d'entraînement est réalisée lorsque la machine est à l'arrêt, bien que la chaîne puisse être déplacée manuellement en vue d'amener le gabarit 33 en regard des outils portés par le chariot porte-tête d'usinage (connu en soi et non représenté). Lorsque le socle est parfaitement solidaire de la chaîne, on amène les outils en regard du gabarit et on positionne leur tranchant de telle sorte que par une seule passe d'outils on réalise une pièce qui sera la reproduction exacte du gabarit. Lorsque les outils ont été correctement positionnés, on démonte le dispositif de réglage et l'on fixe sur la chaîne d'entraînement les ébauches des pièces à usiner, leur positionnement par rapport à la chaîne étant rigoureusement celui du gabarit 33 qui a été enlevé avec le reste du dispositif, et ce,de manière à ce que les outils usinent l'ébauche en une seule passe en reproduisant fidèlement le contour du gabarit qui a servi au réglage.

Le socle sert également de platine à la fixation d'un dispositif de contrôle (fig.4) et comporte à cet égard un bossage cylindrique 5, rigoureusement perpendiculaire à la face supérieure du socle, ce bossage servant de tourillon à une noix 18, elle-même pourvue de deux perçages orthogonaux 19,21, le premier venant s'emboîter sur le bossage cylindrique 5, le second recevant une broche 22, les pièces 5, 18 et 22 étant rendues solidaires dans des positions angulaires déterminées par des organes de blocage 20,23, traversant la noix 18 dans deux plans perpendiculaires, ce blocage étant favorisé par des fentes associées à chacun des deux perçages 19 et 21, et conférant à la noix 18 une certaine élasticité.

La broche 22 est perpendiculaire au bossage 5 du socle et sert de support à une tige 26 portant une noix 27 dans laquelle est prévu un perçage 28 susceptible de recevoir un palpeur ou un comparateur 29, ladite broche 22 étant également fendue pour pouvoir être pincée élastiquement par une vis 25 sur la tige 26. De même, la noix 27 comporte une fente permettant le serrage de l'organe de contrôle 29 par une vis 30 se vissant dans un perçage taraudé. On remarque que la tige 26 est orthogonale à la broche 22 et que si cette broche 22 peut être réglée angulairement par rapport à la noix 18, cette même tige 26 peut être réglée en rotation par rapport à la broche 22. Ce dispositif de contrôle par palpeur permet de vérifier la concentricité, la perpendicularité et l'horizontalité de l'arbre ou broche porte-outils de l'unité d'usinage. Bien entendu, ce dispositif de contrôle 18,22,26,29, est également utilisé lorsque la machine est à l'arrêt, son retrait s'effectuant simultanément avec le socle 31 dont il est provisoirement solidaire. La fig.5 montre à cet égard les différentes pièces de l'appareil de réglage et de contrôle lorsqu'elles sont accouplées les unes aux autres.

0119360

- 6 -

REVENDICATIONS

1°) Appareil de contrôle et de réglage d'outils, adaptable notamment aux machines de l'industrie du bois telles que les tenonneuses-profileuses à entraînement par chaîne, appareil caractérisé en ce qu'il est constitué d'un socle amovible (31) destiné à être fixé sur la chaîne d'entraînement de la machine, lorsque celle-ci est à l'arrêt, ce socle supportant un gabarit (33) par rapport auquel doivent être positionnés les outils portés par le chariot porte-tête d'usinage, ledit socle étant associé par ailleurs à un dispositif (18,22,26, 27,29) de contrôle de la concentricité, de la perpendicularité et de l'horizontalité de l'arbre porte-outils de la tête d'usinage.

2°) Appareil selon la revendication 1, caractérisé en ce que le socle comporte une rainure (1) s'encastrant sur les maillons de la chaîne d'entraînement, ledit socle étant rendu solidaire de la chaîne par des vis de blocage (4).

3°) Appareil selon les revendications 1 et 2, caractérisé en ce que la rainure (1) du socle comporte deux surfaces d'appui de référence (2,3) épousant la face supérieure et au moins l'une des faces latérales des maillons de la chaîne d'entraînement de la machine.

4°) Appareil selon les revendications 1 à 3, caractérisé en ce que le socle comporte à chacune de ses deux extrémités un décrochement (7) en forme de feuillure dans lequel est pratiquée une rainure transversale (6) dont le fond comporte un perçage taraudé (8).

5°) Appareil selon l'une quelconque des revendications 1 à 4, caractérisé en ce que le gabarit de référence (33) est fixé sur un porte-gabarit réglable (32) s'emboîtant sur l'extrémité en forme de feuillure du socle, ce porte-gabarit étant immobilisé par un organe de blocage (12) mobile dans une lumière (11) dudit porte-gabarit et venant se visser dans un perçage (8) du socle.

6°) Appareil selon la revendications 5, caractérisé en ce que les rainures (6) du socle définissent des épaulements (7) en forme de nervures constituant des guides glissières pour le réglage latéral du porte-gabarit (32) par rapport au socle (31).

7°) Appareil selon la revendication 5, caractérisé en ce que le porte-gabarit (32) comporte deux tétons en saillie (13) et un perçage taraudé (14) servant à la fixation du gabarit (33) dont l'immobilisation est assurée par un organe de blocage (15) traversant l'un des trois orifices (16,17) dudit gabarit.

8°) Appareil selon la revendication 1, caractérisé en ce que le socle sert de support à un dispositif de contrôle constitué d'une noix (18) s'emmanchant sur un bossage cylindrique (5) du socle, cette noix comportant un orifice (21) perpendiculaire audit bossage (5) dans lequel est introduite une broche (22) portant une tige (26) porte-noix (27) servant à la fixation d'un comparateur ou palpeur (29).

9°) Appareil selon la revendication 8, caractérisé en ce que la noix (18) du dispositif de contrôle est mobile en rotation sur le bossage (5) du socle (31) pour pouvoir être orientée librement par rapport à celui-ci, la broche (22) étant elle-même orientable par rapport à la noix (18) et la tige (26) porte-noix (27) pouvant également être immobilisée en toute position relative angulaire par rapport à la broche (22).

0119360

1/2

**FIG. 4**

**FIG. 1**

**FIG. 2**

**FIG. 3**

0119360

# FIG.5

0119360

Office européen
des brevets

**RAPPORT DE RECHERCHE EUROPEENNE**

Numéro de la demande

EP    83 40 0548

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | FR-A-2 224 261   (SAUTEREAU) | 1 | B 23 Q   17/16<br>B 27 F    1/02 |
| | --- | | |
| A | EP-A-0 065 767   (HARBS) | | |
| | --- | | |
| A | DE-A-2 840 319   (STEHLE) | | |
| | --- | | |
| A | DE-A-2 419 938   (FESTO) | | |
| | --- | | |
| A | DE-C-  907 123   (FESTO) | | |
| | --- | | |
| A | DE-C-   70 407   (LOEWI) | | DOMAINES TECHNIQUES RECHERCHES (Int. Cl. ³) |
| | ----- | | B 27 F    1/00<br>B 23 Q   17/00<br>B 27 G   19/00 |

Le présent rapport de recherche a été établi pour toutes les revendications

| Lieu de la recherche | Date d'achèvement de la recherche | Examinateur |
|---|---|---|
| LA HAYE | 15-11-1983 | DE GUSSEM J.L. |